# FASCICULE DE BREVET EUROPEEN

(11) **EP 2 210 502 B1**
(45) Date de publication et mention de la délivrance du brevet: **12.10.2011**
(21) Numéro de dépôt: 10151335.6
(22) Date de dépôt: 21.01.2010
(51) Int. Cl.: A23G 3/28, A23P 1/12, A21C 15/00, B29C 47/04

(54) **Appareil pour la réalisation de décorations culinaires à deux couleurs et/ou deux saveurs**
Vorrichtung zur Herstellung von Lebensmitteldekorationen mit zwei Farben oder Geschmacksrichtungen
Apparatus for producing food decorations with two colours or flavours

(30) Priorité: 23.01.2009 FR 0950415
(43) Date de publication de la demande: 28.07.2010
(73) Titulaire: Groupe Matfer Bourgeat, 93260 Les Lilas (FR)
(72) Inventeur: Vasseur, Christophe, 72610 Oisseau le Petit (FR); Friggeri, Patrick, 60350 Attichy (FR)
(74) Mandataire: Chevalier, Renaud Philippe

(56) Documents cités:
- DE-U1- 8 702 580
- FR-A- 1 104 073
- GB-A- 813 514
- US-A- 3 042 263
- US-A- 3 331 535
- US-A- 4 961 517

## Description

La présente invention concerne un appareil destiné à la réalisation de décorations culinaires à deux couleurs et/ou deux saveurs distinctes, c'est-à-dire un appareil qui associe et qui distribue de façon simultanée deux matières alimentaires de consistance pâteuse, distinctes l'une de l'autre par leur aspect et/ou par leur goût. Plus particulièrement, cet appareil associe, à une matière alimentaire principale, une matière alimentaire secondaire qui forme des stries ou rayures parallèles à la surface de la matière principale. Cette invention trouve des applications dans les domaines de la pâtisserie, de la restauration, des activités de traiteur et analogues.

On connaît, depuis fort longtemps, des appareils désignés comme « douilles », utilisés pour la décoration dans le domaine de la pâtisserie, en association avec une poche, pour la distribution d'une matière alimentaire pâteuse unique - voir par exemple les brevets français 416467, 598674 et 1013040.

Il a aussi été déjà proposé des dispositifs analogues mais conçus pour le stockage et la distribution simultanée de deux matières alimentaires distinctes. Dans ces dispositifs, une poche est compartimentée de manière à stocker, de façon séparée, les deux matières à distribuer. Toutefois, ces deux matières sont distribuées « en parallèle » ou de façon concentrique, sans effet d'entraînement d'une matière par l'autre, et sans création d'un décor particulier résultant de l'association de couleurs. Les propositions connues sont relativement nombreuses :
- Brevet français 1104073
- Brevet US 608958 et 4961517
- Brevet britannique GB 2423798
- Brevet allemand DE 3201301
- Modèle d'utilité allemand DE 20111636 U.
Comme on le comprend, de tels dispositifs ne garantissent pas la distribution des deux matières dans une proportion déterminée et constante, garantissant une régularité visuelle et gustative.

Pour éviter cet inconvénient, il a été déjà envisagé des appareils qui assurent l'entraînement d'une matière par l'autre, en prévoyant qu'une matière alimentaire principale, distribuée suivant l'axe central du dispositif, entraîne avec elle une matière alimentaire secondaire amenée latéralement en plusieurs points, et formant ainsi des stries ou des rayures parallèles à la surface de la matière principale - voir en particulier le brevet français 2472947 et le brevet britannique 813514, ainsi qu'accessoirement le brevet US 3331535.

Ces derniers appareils utilisent, pour la distribution simultanée des deux matières avec un effet d'entraînement d'une matière par l'autre, un organe tubulaire parcouru par la matière principale et pourvu d'ouvertures latérales au travers desquelles la matière secondaire est admise pour venir se joindre à la matière principale. Cette conception implique actuellement l'utilisation d'un embout de sortie de section circulaire, et ne permet pas de faire varier la forme générale et l'aspect de détail des matières distribuées. A titre d'exemple significatif, les dispositifs du brevet français 2472947 et du brevet britannique 813514 précités ne permettent pas de faire varier le nombre et la répartition spatiale des stries ou rayures formées par la matière secondaire.

La présente invention vise à éliminer ces derniers inconvénients, et elle a donc pour but de fournir un appareil du genre ici concerné, destiné à la réalisation de décorations culinaires à deux couleurs et/ou deux saveurs, qui permet de modifier facilement la forme et l'aspect du produit distribué.

A cet effet, l'invention a pour objet un appareil destiné à la réalisation de décorations culinaires à deux couleurs et/ou deux saveurs distinctes, l'appareil étant prévu pour la distribution d'une matière alimentaire principale de consistance pâteuse, délivrée suivant son axe central, et d'une matière alimentaire secondaire elle aussi de consistance pâteuse amenée latéralement en plusieurs points et formant ainsi des stries ou rayures parallèles à la surface de la matière principale, l'appareil comprenant des moyens de stockage des deux matières à distribuer ou étant associé à de tels moyens de stockage, et cet appareil étant essentiellement caractérisé par le fait qu'il comporte, en arrière d'un embout de distribution interchangeable avec orifice de sortie par lequel sortent les deux matières alimentaires associées, un fourreau à l'intérieur duquel est disposé un tube central lui-même interchangeable, pourvu d'ouvertures latérales du genre trous ou fentes prévues pour l'amenée de la matière secondaire vers la matière principale, des moyens étant prévus pour l'indexage angulaire du tube central par rapport au fourreau et/ou à l'embout de distribution. Ainsi, l'invention offre la possibilité avantageuse de varier, selon le souhait ou le besoin des utilisateurs, le type d'incrustation de la matière secondaire dans la matière principale, ceci grâce au système ici proposé de tubes interchangeables, notamment avec la possibilité d'obtenir un nombre variable de rayures formées par la matière secondaire à la surface de la matière principale. Par exemple selon le nombre des ouvertures du genre trous ou fentes du tube, on peut obtenir 2, 3, 4 ou 5 rayures. De plus, la section et l'emplacement des trous ou fentes des tubes peuvent varier pour l'obtention d'effets visuels divers.

De plus, grâce à l'indexage du tube par rapport à l'embout de distribution, l'invention permet de distribuer non seulement des cordons de produit de section ronde, mais encore des cordons de produit de section autre, par exemple plate, selon la forme de l'orifice de sortie de l'embout, tout en respectant une position et une répartition précises des rayures de matière secondaire à la surface de la matière principale.

Du point de vue constructif, et afin de faciliter le montage interchangeable du tube central, celui-ci est avantageusement pourvu, à son extrémité la plus proche de l'embout de distribution, de moyens d'indexage angulaire relativement au fourreau, et de moyens de blocage sur ce fourreau. Ces moyens d'indexage et de blocage prennent avantageusement la forme d'ergots ou de bossages, facilement obtenus par moulage lors de la réalisation du tube, qui coopèrent avec des conformations complémentaires, par exemple avec des encoches d'indexage et de blocage, prévues à la base du fourreau.

De préférence, notamment dans le cas où l'embout de distribution comporte un orifice de sortie de section non ronde, par exemple de forme aplatie, cet embout comporte lui-même des moyens d'indexage angulaire relativement au fourreau et/ou au tube central, de manière à faire correspondre la position angulaire du tube, donc aussi de ses ouvertures latérales du genre trous ou fentes, avec la position angulaire de l'embout de distribution. Si l'embout de distribution comporte un filetage qui coopère avec un filetage complémentaire porté par le fourreau, une solution particulièrement simple consiste à réaliser l'indexage angulaire de l'embout relativement au fourreau en fin de vissage, par butée de cet embout contre une collerette du fourreau.

L'appareil objet de l'invention peut être complété par un dispositif de « pistolet » ou de presse, adapté pour extruder simultanément les deux matières alimentaires pâteuses à distribuer. Toutefois, cet appareil peut aussi être simplement inséré dans une « poche pâtissière à décor » de conception classique, en général disponible chez les professionnels susceptibles d'utiliser ledit appareil ; ainsi, l'appareil objet de l'invention est réalisable de façon simple, compacte et économique, tout en conservant l'ensemble de ses fonctions et avantages.

L'invention sera mieux comprise à l'aide de la description qui suit, en référence au dessin schématique annexé représentant, à titre d'exemple, une forme d'exécution de cet appareil pour la réalisation de décorations culinaires à deux couleurs et/ou deux saveurs :
Figure 1 est une vue en éclaté d'un appareil conforme à la présente invention, montrant ses divers composants ;
Figure 2 est une vue en coupe passant par l'axe central de cet appareil, suivant la ligne II-II de la figure 3 ;
Figure 3 est une vue de côté de l'appareil, équipé d'un embout de distribution avec orifice de sortie de section circulaire ;
Figure 4 est une vue en coupe transversale du tube central interchangeable de l'appareil des figures 1 à 3, au niveau des orifices latéraux ;
Figures 5 et 6 sont des vues en coupe similaires à la figure 4, illustrant des variantes du tube central interchangeable ;
Figure 7 est une vue de côté du même appareil, équipé d'un embout de distribution avec orifice de sortie de section plate ;
Figure 8 est une vue en plan par-dessus de l'appareil de la figure 7 ;
Figure 9 est une vue en coupe transversale d'un tube central utilisable dans l'appareil des figures 7 et 8 ;
Figure 10 est une vue de côté du fourreau seul, avec ses moyens d'indexage et de blocage ;
Figure 11 est une vue en coupe de ce fourreau, suivant la ligne XI - XI de la figure 10 ;
Figure 12 illustre l'utilisation de l'appareil objet de l'invention en combinaison avec une « poche pâtissière à décor ».

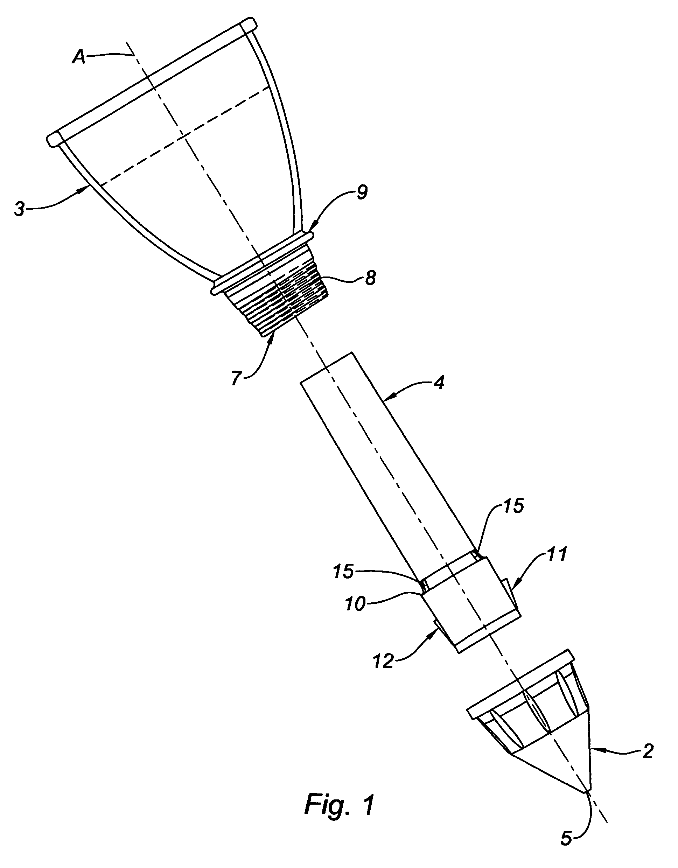

En se référant aux figures 1 à 3, un appareil conforme à l'invention, destiné à la réalisation de décorations culinaires, se compose essentiellement d'un embout de distribution 2, d'un fourreau 3 et d'un tube central 4, disposés coaxialement suivant un axe central A. Lorsque ces trois composants sont réunis, l'embout de distribution 2 est monté à la base du fourreau 3, qui possède une forme évasée vers le haut, et le tube 4 prend place à l'intérieur du fourreau 3, entre l'embout 2 et le niveau supérieur de ce fourreau 3.

De forme générale conique, l'embout de distribution 2 comporte à sa pointe un orifice de sortie 5, par lequel est distribué le produit à délivrer. Dans sa partie supérieure, l'embout 2 est pourvu d'un filetage intérieur 6 prévu pour sa liaison avec le fourreau 3.

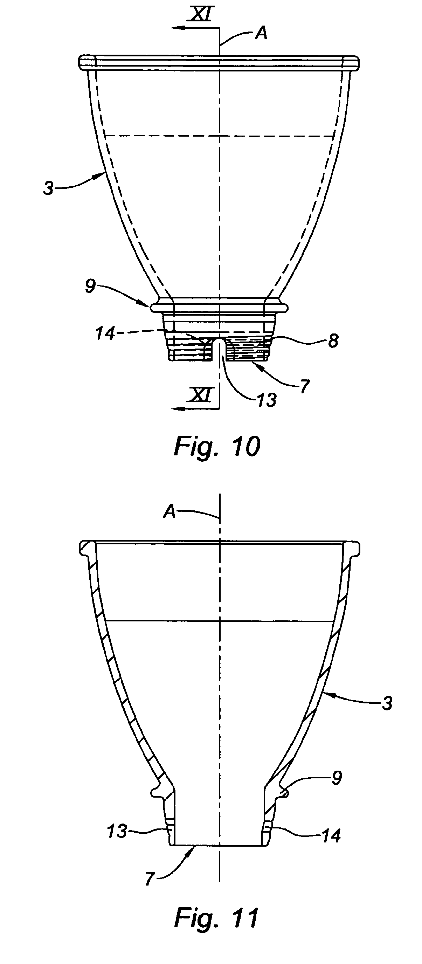

Le fourreau 3, représenté plus particulièrement sur les figures 10 et 11, comporte à sa base une large ouverture circulaire 7, autour de laquelle est aménagé un filetage extérieur 8, complémentaire du filetage intérieur 6 de l'embout de distribution 2. Une collerette 9 est formée sur l'extérieur du fourreau 3, au-dessus du filetage extérieur 8.

Le tube central 4 présente, à faible hauteur au-dessus de son extrémité inférieure, un épaulement annulaire 10 prévu pour venir en butée contre le bord circulaire de l'ouverture 7 du fourreau 3. Réalisé par moulage, ce tube 4 comporte, vers son extrémité inférieure, deux bossages diamétralement opposés, avec un premier bossage 11 servant à l'indexage angulaire du tube 4, et un second bossage 12 servant au blocage de ce tube 4 relativement au fourreau 3.

Le premier bossage 11 du tube central 4 est prévu pour coopérer avec une première encoche 13, formée à la base du fourreau 3 au niveau du filetage 8, pour réaliser l'indexage angulaire du tube central 4 par rapport au fourreau 3. Le second bossage 12 du tube central 4 est prévu pour coopérer avec une seconde encoche 14, elle aussi formée à la base du fourreau 3 au niveau du filetage 8 mais dans une position diamétralement opposée à la première encoche 13, pour réaliser le blocage du tube 4 sur le fourreau 3.

Le tube central 4 est pourvu d'une série de trous latéraux 15, percés dans sa paroi au-dessus de l'épaulement annulaire 10, les trous 15 étant en nombre variable (comme précisé ci-après). Ce tube 4 comporte enfin, intérieurement, des paires de nervures 16 parallèles à son axe, qui encadrent les différents trous latéraux 15.

L'indexage angulaire du tube central 4, par rapport au fourreau 3, fixe les positions angulaires de tous les trous 15 de ce tube 4 relativement au fourreau 3, donc aussi par rapport à l'embout de distribution 2, fixé à la base du fourreau 3. A cet égard, on notera que le vissage de l'embout de distribution 2 sur le filetage 8 du fourreau 3, jusqu'à la butée de cet embout 2 contre la collerette 9 du fourreau 3, détermine une position angulaire ou orientation constante de l'embout de distribution 2 relativement au fourreau 3, donc aussi relativement au tube central 4.

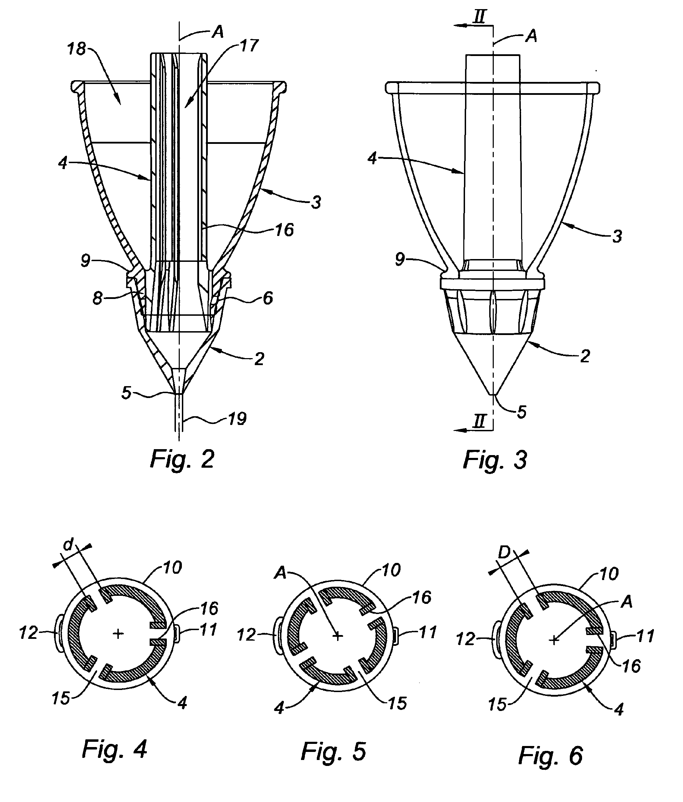

Pour l'utilisation de l'appareil, une matière alimentaire principale 17 de consistance pâteuse est amenée dans le tube 4, donc au centre de l'appareil. Une autre matière alimentaire, dite matière secondaire 18, elle aussi de consistance pâteuse, est amenée dans le fourreau 3 autour du tube 4, donc coaxialement à la matière principale 17. Lors de la délivrance de la matière principale 17 par l'orifice de sortie 5 de l'embout de distribution 2, cette matière principale entraîne avec elle la matière secondaire 18, au travers des différents trous latéraux 15 du tube central 4. Il en résulte que la matière secondaire 18 va former des stries ou rayures 19 parallèles à la surface de la matière principale 17 (voir figure 2). En particulier, si la matière secondaire 18 est d'une couleur distincte de celle de la matière principale 17, ces stries ou rayures 19 créeront un effet décoratif spécifique. De plus, si la matière secondaire 18 possède une saveur différente de celle de la matière principale 17, on obtiendra (lors de la consommation du produit) une combinaison de deux saveurs.

Dans le cas le plus simple (figures 1 à 3), l'orifice de sortie 5 de l'embout de distribution 2 est de section circulaire, si bien que le produit est délivré sous la forme d'un cordon lui-même de section circulaire, avec des stries ou rayures 19 parallèles, réparties sur la périphérie de ce cordon de produit. Selon le nombre et les dimensions des trous latéraux 15 du tube central 4, on obtiendra des stries ou rayures plus ou moins nombreuses, et aussi plus ou moins larges. De plus, dans la mesure où le tube central 4 est interchangeable, il sera possible d'obtenir avec le même appareil diverses incrustations de matière secondaire.

Ainsi, comme l'illustre la figure 4, un tube central 4 pourvu de trois trous latéraux 15 de petit diamètre d, par exemple égal à deux millimètres, permet d'obtenir trois rayures relativement étroites. Ce premier tube peut être remplacé par un tube central 4 pourvu de quatre trous latéraux 15, qui permettra d'obtenir quatre rayures - voir figure 5. Il peut encore être remplacé par un tube central 4 pourvu de trois trous 15 de plus grand diamètre D, par exemple égal à trois millimètres, lequel permettra d'obtenir trois rayures relativement larges - voir figure 6.

Dans tous les exemples précédents, les rayures obtenues sont régulièrement réparties sur la circonférence du cordon de produit délivré par l'appareil, ce cordon étant de section circulaire. Dans la mesure où l'embout de sortie 2 utilisé est lui-même interchangeable, on peut notamment utiliser, en combinaison avec l'un ou l'autre des tubes centraux 4 précédemment décrits :
- Soit un embout de distribution 2 avec un orifice de sortie 5 de section strictement circulaire, qui délivrera un produit en forme de cordon d'aspect lisse ;
- Soit un embout de sortie 2 avec un orifice de sortie 5 à bord dentelé, qui délivrera un produit en forme de cordon d'aspect cannelé.

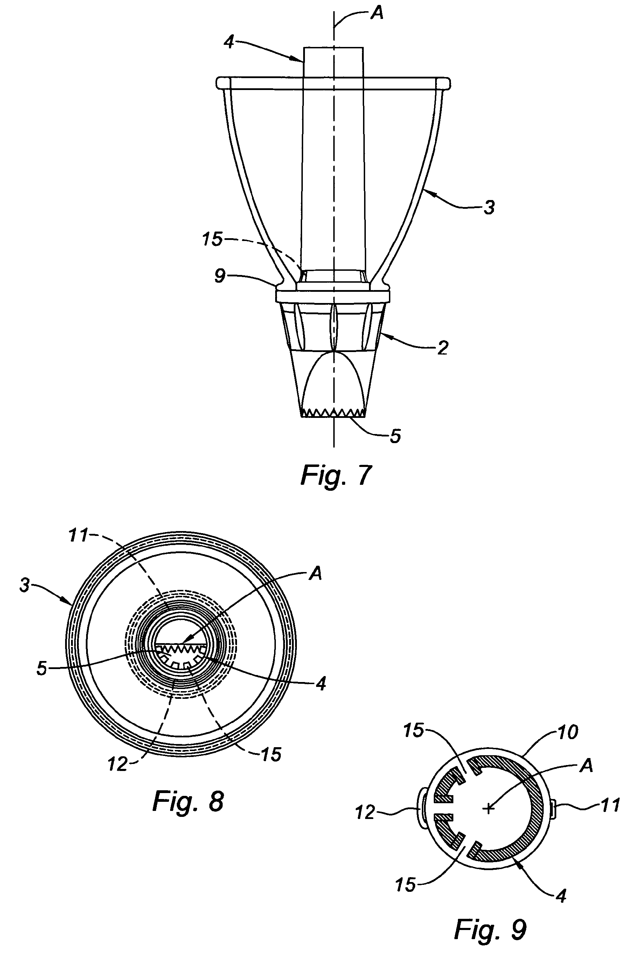

Toutefois, comme l'illustrent les figures 7 à 9, l'embout de distribution 2 peut aussi comporter un orifice de sortie 5 de section autre que circulaire, par exemple de section plate, en vue de la délivrance d'un produit en forme de bande plus ou moins aplatie. Dans un tel cas, les stries ou rayures de matière secondaire doivent occuper des positions appropriées, en concordance avec la forme du produit délivré. Dans l'exemple illustré, il s'agit d'amener toute la matière secondaire sur un seul et même côté du produit délivré.

Dans ce cas, comme le montre en particulier la figure 8, l'embout de distribution 2 est indexé angulairement de telle sorte que l'orifice de sortie 5 soit orienté d'une manière sensiblement diamétrale, et perpendiculairement à une ligne diamétrale passant par les moyens d'indexage et de blocage du tube central 4 relativement au fourreau 3. De plus, comme le montre la figure 9, les trous latéraux 15 tube central 4 sont ici au nombre de trois (par exemple), et sont rapprochés de manière à se situer tous sur une même demi-circonférence de ce tube 4, par exemple du côté du bossage 12 prévu pour le blocage dudit tube relativement au fourreau 3. Ainsi, l'embout de distribution 2 avec orifice de sortie « plat » 5 se trouve ici indexé angulairement relativement au tube central 4, par l'intermédiaire du fourreau 3, de telle sorte que l'amenée de toute la matière secondaire se fasse en correspondance avec un côté prédéfini de l'orifice de sortie 5.

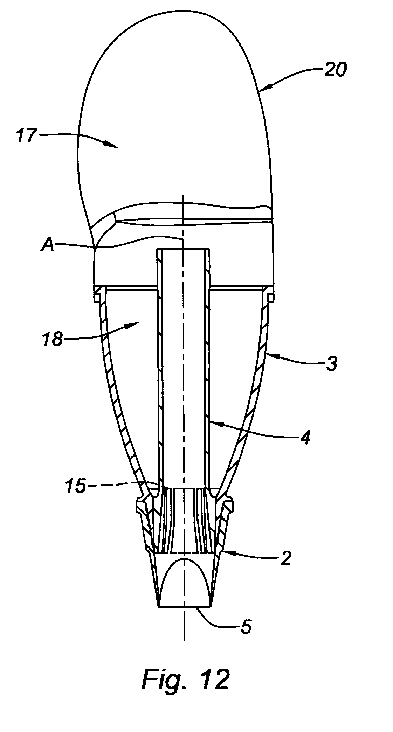

Enfin, la figure 12 illustre une utilisation de l'appareil, précédemment décrit, en combinaison avec une « poche pâtissière à décor » 20, adaptée sur la partie supérieure élargie du fourreau 3. La poche 20 est remplie de la matière principale 17, laquelle passe de la poche 20 dans le tube central 4 de l'appareil. Le fourreau 3 étant rempli de la matière secondaire 18 (autour du tube central 4), la matière principale 17 contenue dans la poche 20 va aussi presser la matière secondaire 18 pour la forcer à passer au travers des trous latéraux 15 du tube 4, et à se réunir à la matière principale en formant les stries ou rayures souhaitées.

On ne s'éloignerait pas du cadre de l'invention, telle que définie dans les revendications annexées :
- En modifiant les formes de détail ou les matières constitutives des divers composants de l'appareil ;
- En réalisant l'embout de distribution avec un orifice de sortie de toute forme ;
- En prévoyant, sur le tube central, des ouvertures latérales en nombre quelconque, de toutes formes et dimensions ;
- En prévoyant tous moyens additionnels pour la poussée de la matière principale et de la matière secondaire vers l'embout de distribution ;
- En destinant l'appareil à toutes professions et activités : pâtisserie, restauration, traiteur, etc...

## Revendications

1. Appareil destiné à la réalisation de décorations culinaires à deux couleurs et/ou deux saveurs distinctes, l'appareil étant prévu pour la distribution d'une matière alimentaire principale (17) de consistance pâteuse, délivrée suivant son axe central (A), et d'une matière alimentaire secondaire (18) elle aussi de consistance pâteuse amenée latéralement en plusieurs points et formant ainsi des stries ou rayures (19) parallèles à la surface de la matière principale (17), l'appareil comprenant des moyens de stockage des matières (17, 18) à distribuer ou étant associé à de tels moyens de stockage (20), **caractérisé en ce qu'**il comporte, en arrière d'un embout de distribution (2) interchangeable avec orifice de sortie (5) par lequel sortent les deux matières alimentaires (17, 18) associées, un fourreau (3) à l'intérieur duquel est disposé un tube central (4) lui-même interchangeable pourvu d'ouvertures latérales (15) du genre trous ou fentes prévues pour l'amenée de la matière secondaire (18) vers la matière principale (17), des moyens (9, 11, 12, 13, 14) étant prévus pour l'indexage angulaire du tube central (4) par rapport au fourreau (3) et/ou à l'embout de distribution (2).

2. Appareil selon la revendication 1, **caractérisé en ce que** le tube central (4) est pourvu, à son extrémité la plus proche de l'embout de distribution (2), de moyens (11) d'indexage angulaire relativement au fourreau (3), et de moyens (12) de blocage sur ce fourreau (3).

3. Appareil selon la revendication 2, **caractérisé en ce que** lesdits moyens d'indexage et de blocage prennent la forme d'ergots ou de bossages (11, 12), obtenus par moulage lors de la réalisation du tube (4), qui coopèrent avec des conformations complémentaires, par exemple avec des encoches d'indexage et de blocage (13, 14), prévues à la base du fourreau (3).

4. Appareil selon l'une des revendications 1 à 3, **caractérisé en ce que**, notamment dans le cas où l'embout de distribution (2) comporte un orifice de sortie (5) de section non ronde, par exemple de forme aplatie, cet embout (2) comporte lui-même des moyens d'indexage angulaire relativement au fourreau (3) et/ou au tube central (4), de manière à faire correspondre la position angulaire du tube (4), donc aussi de ses ouvertures latérales (15) du genre trous ou fentes, avec la position angulaire de l'embout de distribution (2).

5. Appareil selon la revendication 4, **caractérisé en ce que** l'embout de distribution (2) comporte un filetage (6) qui coopère avec un filetage complémentaire (8) porté par le fourreau (3), et **en ce que** l'indexage angulaire de l'embout (2) relativement au fourreau (3) est réalisé en fin de vissage, par la butée de cet embout (2) contre une collerette (9) du fourreau (3).

6. Appareil selon l'une des revendications 1 à 5, **caractérisé par** son insertion dans une « poche pâtissière à décor » (20).

## Claims

1. A device intended for producing cooking decorations with two colors and/or two distinct flavors, the device being provided for distributing a main foodstuff material (17) of pasty consistency, delivered along its central axis (A), and a secondary foodstuff material (18) itself also of pasty consistency laterally brought into several points and thus forming striations or stripes (19) parallel to the surface of the main material (17), the device comprising means for storing the materials (17, 18) to be dispensed or associated with such a storage means (20), **characterized in that** it includes, at the rear of an interchangeable dispensing endpiece (2) with an outlet orifice (5) through which emerge both associated foodstuff materials (17, 18), a sheath (3) inside which is arranged a central tube (4) itself interchangeable provided with side apertures (15) of the hole or slot kind intended for bringing the secondary material (18) to the main material (17), means (9, 11, 12, 13, 14) being provided for angular indexing of the central tube (4) relatively to the sheath (3) and/or to the dispensing endpiece (2).

2. The device according to claim 1, **characterized in that** the central tube (4) is provided, at its end closest to the dispensing endpiece (2), with means (11) for angular indexing relatively to the sheath (3), and with blocking means (12) on this sheath (3).

3. The device according to claim 2, **characterized in that** said indexing and blocking means assume the shape of lugs or bosses (11, 12), obtained by molding during the making of the tube (4), which cooperate with mating conformations, for example with indexing and blocking notches (13, 14), provided at the base of the sheath (3).

4. The device according to one of claims 1 to 3, **characterized in that**, notably in the case when the dispensing endpiece (2) includes an outlet orifice (5) with a non-round section, for example with a flattened shape, this endpiece (2) itself includes means for angular indexing relatively to the sheath (3) and/or to the central tube (4), so as to have the angular position of the tube (4), therefore also of its side apertures (15) of the whole or slot kind, correspond with the angular position of the dispensing endpiece (2).

5. The device according to claim 4, **characterized in that** the dispensing endpiece (2) includes a threading (6), which cooperates with a mating threading (8) borne by the sheath (3), and **in that** the angular indexing of the endpiece (2) relatively to the sheath (3) is achieved at the end of screwing, by the abutment of this endpiece (2) against a collar (9) of the sheath (3).

6. The device according to one of claims 1 to 5, **characterized by** its insertion in a « decorative pastry bag » (20).

## Patentansprüche

1. Apparat zum Herstellen kulinarischer Dekorationen in zwei unterschiedlichen Farben und/oder zwei Geschmacksrichtungen, wobei der Apparat zum Verteilen einer Hauptnahrungsstoffs (17) teigiger Konsistenz vorgesehen ist, der gemäß seiner Mittelachse (A) bereitgestellt wird, und eines sekundären Nahrungsstoffs (18), der ebenfalls eine teigige Konsistenz hat und seitlich an mehreren Punkten bereitgestellt wird und **dadurch** auf dem Hauptstoff (17) parallele Riffel oder Streifen (19) bildet, wobei der Apparat Vorratsmittel für die zu verteilenden Stoffe (17, 18) umfasst oder an derartige Vorratsmittel (20) angeschlossen ist, **dadurch gekennzeichnet, dass** er hinter einem austauschbaren Verteilerstutzen (2) mit Ausgangsöffnung (5), durch die die zwei verbundenen Nahrungsstoffe (17, 18) austreten, eine Stulpe (3) aufweist, in der ein ebenfalls austauschbares zentrales Rohr (4) mit seitlichen Öffnungen (15) in der Art von Löchern oder Schlitzen angeordnet ist, die zur Bereitstellung des sekundären Stoffs (18) in Richtung des Hauptstoffs (17) vorgesehen sind, wobei Mittel (9, 11, 12, 13, 14) für die Winkelpositionierung des zentralen Rohrs (4) im Verhältnis zur Stulpe (3) und/oder am Verteilerstutzen (2) vorgesehen sind.

2. Apparat nach Anspruch 1, **dadurch gekennzeichnet, dass** das zentrale Rohr (4) an seinem Ende, das dem Verteilerstutzen (2) am nächsten ist, mit Winkelpositionierungsmitteln (11) relativ zur Stulpe (3) und mit Blockiermitteln (12) auf dieser Stulpe (3) ausgestattet ist.

3. Apparat nach Anspruch 2, **dadurch gekennzeichnet, dass** die Positionierungs- und Blockiermittel die Form von Spornen oder Wülsten (11, 12) annehmen, die bei der Herstellung des Rohrs (4) durch Formen gefertigt werden, die mit komplementären Formen zusammenarbeiten, zum Beispiel mit Positionierungs- und Blockierkerben (13, 14), die an der Basis der Stulpe (3) vorgesehen sind.

4. Apparat nach einem der Ansprüche 1 bis 3, **dadurch gekennzeichnet, dass**, vor allem, wenn der Verteilerstutzen (2) eine Ausgangsöffnung (5) mit nicht rundem Querschnitt aufweist, zum Beispiel in abgeflachter Form, dieser Stutzen (2) selbst Winkelpositionierungsmittel relativ zu der Stulpe (3) und/oder zum zentralen Rohr (4) aufweist, um Übereinstimmung zwischen der Winkelposition des Rohrs (4), also auch seiner seitlichen Öffnung (15) in der Art von Löchern oder Schlitzen, mit der Winkelposition des Verteilerstutzens (2) herzustellen.

5. Apparat nach Anspruch 4, **dadurch gekennzeichnet, dass** der Verteilerstutzen (2) ein Gewinde (6) aufweist, das mit einem komplementären Gewinde (8) der Stulpe (3) zusammenarbeitet, und dass die Winkelpositionierung des Stutzens (2) relativ zur Stulpe (3) am Ende des Verschraubens durch den Anschlag dieses Stutzens (2) gegen einen Ring (9) dieser Stulpe (3) erfolgt.

6. Apparat nach einem der Ansprüche 1 bis 5, durch sein Einsetzen in eine "Dekortortenspritze" (20) **gekennzeichnet**.
